# EUROPEAN PATENT APPLICATION

(11) **EP 2 897 343 A1**
(43) Date of publication of application: **22.07.2015**
(21) Application number: 13837748.6
(22) Date of filing: 27.08.2013
(51) Int. Cl.: H04L 29/08

(54) **CONTENT-NETWORK-LINKED DUAL ACCELERATION METHOD AND SYSTEM**

(30) Priority: 17.09.2012 CN 201210345541
(71) Applicant: ZTE Corporation, Shenzhen, Guangdong 518057 (CN)
(72) Inventor: HUANG, Sunliang, Shenzhen Guangdong 518057 (CN); CHEN, Jianye, Shenzhen Guangdong 518057 (CN)
(74) Representative: Gevers Patents
(86) International application number: PCT/CN2013/082412
(87) International publication number: WO 2014/040497

(57) **Abstract**

A double-acceleration method and system for content and network linkage are described, which includes that a CDN node server provides content acceleration service for application service selected by a user, the CDN node server transmits a network acceleration request for the application service selected by the user to a policy control server, the policy control server transmits a network acceleration policy for the application service selected by the user to network service control equipment after receiving the network acceleration request, and the network service control equipment provides network acceleration service for the application service selected by the user after receiving the network acceleration policy. According to the method and system, the linkage and coordination between a network and a content can be implemented, the service provision and capability guarantee of an operating company can be effectively improved, and user experience can be improved.

## Description

### TECHNICAL FIELD

The disclosure relates to the technical field of Content Delivery Network (CDN) and communication networks, and in particular to a double-acceleration method and system for content and network linkage.

### BACKGROUND

Along with the development of a network technology, a network operating company can provide a larger and larger bandwidth for a user, revenue, however, cannot be correspondingly increased, and an Average Revenue Per User (ARPU) has been declining all the time. Therefore, the operating company has been exploring differentiated service provision to provide different service for users to increase service revenue, but little effects are achieved.

Since 2011, the operating companies have focused on a smart pipe and expected to provide better service, increase the service revenue and improve the status of the network operating companies in an industrial chain by effectively improving and integrating networks. A Bandwidth on Demand (BoD) service is a representative service, and the so-called BoD service is to enable a user to freely select a service acceleration package through a specified service page and dynamically increase a network access bandwidth of the user, so as to provide differentiated service. At present, the BoD service can increase an access bandwidth of users and guarantee the access bandwidth; however, the access bandwidth is still shared on a Broadband Remote Access Server (BRAS) of a network service control point, and cannot be guaranteed for a user, moreover, the download speed of a user and user experience are limited by a remote download server and a remote application server, which results in that the BoD service has yet not been actually applied in a large scale after years' development, and has very few active users. The main reason is that the operating companies can only guarantee the access network bandwidth but cannot ensure the corresponding content. The isolation of content from network and the low possibility of coordination can not actually guarantee of the user experience.

In terms of content and application, along with the rapid development of network, contents and applications get explosive growth. The size of an application program is increased from original dozens of KB to a few GB, video applications have become more plentiful, but a telecommunication operating company is limited by an application system so as not to ensure the user experience. A content and application provider incapable of controlling a physical network can only perform corresponding optimization on the application level. For example, some Peer-to-Peer (P2P) download software increases the download speed of a user through the optimization of a P2P node; some voice software improves the quality of voice through an optimized compression algorithm. Much video application software guarantees video playing quality in a pre-buffering manner. However, the optimization on the application level is limited by a network bandwidth and network quality, so that the user experience cannot be well guaranteed.

From the above, network and content are separated all the time at present, which affects the user experience, so how to implement the coordination between the network and the content as well as the effective perception and linkage of the network and the content becomes a problem urgently to be solved.

### SUMMARY

In view of this, the embodiments of the disclosure provide a double-acceleration method and system for content and network linkage, so as to implement the linkage and coordination of network and content, effectively improve the service provision and capability guarantee of an operating company and improve user experience.

In order to achieve the purpose, the technical solutions of the embodiments of the disclosure are implemented as follows.

An embodiment of the disclosure provides a double-acceleration method for content and network linkage, which includes:
a CDN node server provides content acceleration service for application service selected by a user;
the CDN node server transmits a network acceleration request for the application service selected by the user to a policy control server;
the policy control server transmits a network acceleration policy for the application service selected by the user to network service control equipment after receiving the network acceleration request; and
the network service control equipment provides network acceleration service for the application service selected by the user after receiving the network acceleration policy.

Here, before the step that the CDN node server provides the content acceleration service for the application service selected by the user, the method further may include that the CDN node server creates a user state machine for the user to manage and maintain a user state; or,
the CDN node server creates a user state machine for the user according to the application service selected by the user, to manage and maintain a user state.

Before the step that the CDN node server creates the user state machine for the user, to manage and maintain the user state, the method may further include that the user accesses an application system; the access of the user is reoriented to the CDN node server; and the user selects the application service.

In addition, the user state may includes an ordinary download state, a network accelerated download state, a content accelerated download state, a content and network double-accelerated download state, an on state and an off state.

The step that the CDN node server transmits the network acceleration request for the application service selected by the user to the policy control server may include that the CDN node server transmits the network acceleration request for the application service selected by the user to the policy control server in the ordinary download state or content accelerated download state maintained by the user state machine.

Before the step that the CDN node server transmits the network acceleration request for the application service selected by the user to the policy control server, the method may further include that the CDN node server sets its own interface for interacting with the policy control server.

After the step that the network service control equipment provides the network acceleration service for the application service selected by the user after receiving the network acceleration policy, the method may further include that an application service completion message for triggering is generated after the application service selected by the user is completed, the application service completion message triggers the CDN node server to cancel the content acceleration service for the application service selected by the user, and meanwhile, the application service completion message triggers the CDN node server to transmit a cancelation request for cancelling the network acceleration policy to the policy control server;
the policy control server transmits a network acceleration cancelation policy for the application service selected by the user to the network service control equipment after receiving the cancelation request; and
the network service control equipment cancels the network acceleration service for the application service selected by the user after receiving the network acceleration cancelation policy.

The embodiment of the disclosure further provides a double-acceleration system for content and network linkage, the system including a CDN node server, a policy control server and network service control equipment, wherein
the CDN node server is configured to provide content acceleration service for application service selected by a user, and transmit a network acceleration request for the application service selected by the user to the policy control server;
the policy control server is configured to transmit a network acceleration policy for the application service selected by the user to the network service control equipment according to the network acceleration request after receiving the network acceleration request transmitted by the CDN node server; and
the network service control equipment is configured to provide network acceleration service for the application service selected by the user after receiving the network acceleration policy transmitted by the policy control server.

Here, the CDN node server may be further configured to create a user state machine for the user to manage and maintain a user state; or,
the CDN node server may be further configured to create a user state machine for the user according to the application service selected by the user, to manage and maintain a user state.

The CDN node server may be further configured to trigger itself to cancel the content acceleration service for the application service selected by the user according to an application service completion message, and transmit a cancellation request for cancelling the network acceleration policy to the policy control server;
the policy control server is further configured to transmit a network acceleration cancelation policy for the application service selected by the user to the network service control equipment after receiving from the CDN node server the cancelation request for cancelling the network acceleration policy; and
the network service control equipment may be further configured to cancel the network acceleration service for the application service selected by the user according to the network acceleration cancellation policy after receiving the network acceleration cancelation policy transmitted by the policy control server.

The double-acceleration method and system for content and network linkage provided by the embodiments of the disclosure have advantages and characteristics as follows:
the embodiments of the disclosure implement effective combination and linkage of content distribution and network bearing of an application service selected by a user on the basis of the CDN node server, the policy control server, the user state machine and the network service control equipment, and in such a manner, the linkage and coordination of network and content can be implemented, and a network acceleration policy and a content acceleration policy can be pertinently implemented, thereby implementing the double acceleration of the content and the network;
according to the embodiments of the disclosure, the user state machine is added in the CDN node server, and is adopted to maintain information such as a connecting state of a user and a content distribution state to enable the CDN node server to perform content acceleration and content guaranteeing for an application selected by the user, thereby effectively improving the service provision and capability guarantee of an operating company and further improve the user experience;
according to the embodiments of the disclosure, the interface for interaction with the policy control server is added in the CDN node server, so that the CDN node server can interact with the policy control server, a linkage mechanism between the CDN node server and the network is further added, and a foundation is laid for implementing the coordination between the network and the content;
the embodiments of the disclosure can implement network acceleration for application service selected by a user on the basis of the user state machine of the CND node server, in combination with the interaction between the CDN node server and the policy control server as well as the cooperation of the network service control equipment, thereby implementing network guaranteeing for the application service selected by the user; and
according to the embodiments of the disclosure, the CND node server may further trigger the initiation of a policy request to the policy control server to acquire new policy information or recover a service policy of a user according to the usage condition of user resources, the on or off state of application service, the connecting state of the user with network, and the like.

### BRIEF DESCRIPTION OF THE DRAWINGS

Fig. 1 is an implementation flowchart of a double-acceleration method for content and network linkage according to an embodiment of the disclosure;
Fig. 2 is an implementation flowchart of a method according to embodiment 1 of the disclosure; and
Fig. 3 is an implementation flowchart of a double-acceleration process for content and network linkage with a user state machine according to an embodiment of the disclosure.

### DETAILED DESCRIPTION

The implementation of the technical solutions of the embodiments of the disclosure is described below with reference to the drawings in detail.

The embodiment of the disclosure provides a double-acceleration system for content and network linkage, which includes a CDN node server, a policy control server and network service control equipment, wherein
the CDN node server is configured to provide content acceleration service for application service selected by a user, and transmit a network acceleration request for the application service selected by the user to the policy control server;
the policy control server is configured to transmit a network acceleration policy for the application service selected by the user to the network service control equipment according to the network acceleration request after receiving the network acceleration request transmitted by the CDN node server; and
the network service control equipment is configured to provide network acceleration service for the application service selected by the user after receiving the network acceleration policy transmitted by the policy control server.

In one embodiment, the CDN node server is further configured to create a user state machine for the user to manage and maintain a user state, or, is further configured to create a user state machine for the user according to the application service selected by the user, to manage and maintain the user state.

The CDN node server is further configured to trigger itself to cancel the content acceleration service for the application service selected by the user according to an application service completion message, and transmit a cancellation request for cancelling the network acceleration policy to the policy control server;
the policy control server is further configured to transmit a network acceleration cancelation policy for the application service selected by the user to the network service control equipment after receiving the cancelation request of the network acceleration policy from the CDN node server; and
the network service control equipment is further configured to cancel the network acceleration service for the application service selected by the user according to the network acceleration cancellation policy after receiving the network acceleration cancelation policy transmitted by the policy control server.

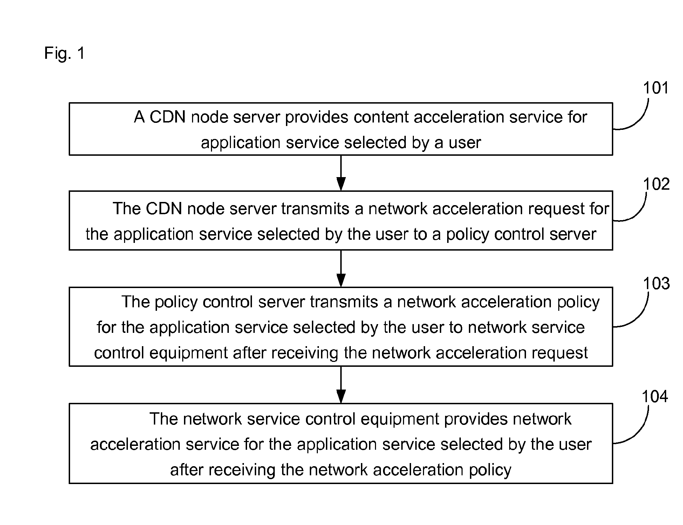

Based on the double-acceleration system for content and network linkage, Fig. 1 is an implementation flowchart of a double-acceleration method for content and network linkage, and as shown in Fig. 1, the method includes the following steps.

Step 101 includes that a CDN node server provides content acceleration service for application service selected by a user.

Here, a manner for the content acceleration service may be determined according to a specific implementation method of the CDN node server, and different solutions, such as combination of the CDN node server and a P2P technology, may be adopted for different link manners and download manners.

Before Step 101, the method may further include that the user accesses an application system; the access of the user is reoriented to the CDN node server; the CDN node server creates a user state machine for the user to manage and maintain a user state; and the user selects the application service; or,
the user accesses the application system; the access of the user is reoriented to the CDN node server; the user selects the application service; and the CDN node server creates a user state machine for the user according to the application service selected by the user, to manage and maintain the user state.

The user state includes an ordinary download state, a network accelerated download state, a content accelerated download state, a content and network double-accelerated download state, an on state and an off state.

Step 102 includes that the CDN node server transmits a network acceleration request for the application service selected by the user to a policy control server.

Specifically, the CDN node server transmits the network acceleration request for the application service selected by the user to the policy control server in the ordinary download state maintained by the user state machine or the content accelerated download state maintained by the user state machine.

Before Step 102, the method may further include that the CDN node server sets its own interface for interacting with the policy control server.

Step 103 includes that the policy control server transmits a network acceleration policy for the application service selected by the user to network service control equipment after receiving the network acceleration request.

Here, during specific implementation, the policy control server preferably transmits a network acceleration policy for a user-selected application service to the network service control equipment; and if support is not provided, the policy control server may transmit a user network connection-based network acceleration policy to the network service control equipment.

Step 104 includes that the network service control equipment provides network acceleration service for the application service selected by the user after receiving the network acceleration policy.

Here, for an implementation manner for the network acceleration service, the network service control equipment preferably provides a network acceleration service guarantee on the basis of the application service selected by the user; or, the network acceleration service guarantee may further be provided on the basis of a network connection of the user.

After Step 104, the method may further include that an application service completion message is generated after the application service selected by the user is completed, and the application service completion message triggers the CDN node server to cancel the content acceleration service for the application service selected by the user; and meanwhile, the application service completion message triggers the CDN node server to transmit a cancelation request for cancelling the network acceleration policy to the policy control server, the policy control server transmits a network acceleration cancelation policy for the application service selected by the user to the network service control equipment after receiving the cancelation request, and the network service control equipment cancels the network acceleration service for the application service selected by the user after receiving the network acceleration cancelation policy.

### Embodiment 1

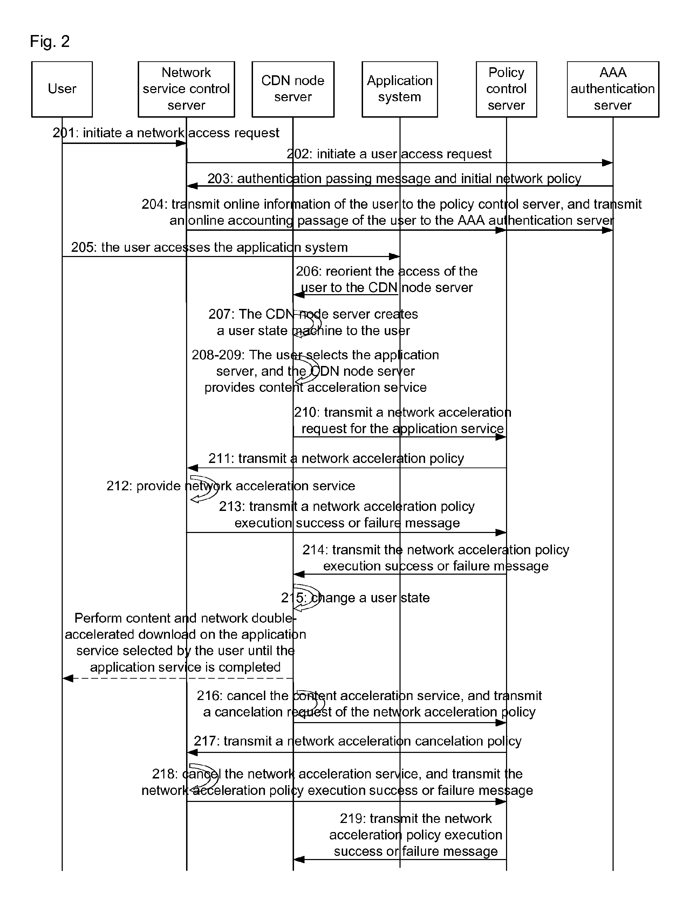

Fig. 2 is an implementation flowchart of a method according to embodiment 1 of the disclosure, and in the embodiment, a CDN node server, a policy control server, network service control equipment, a user, an application system, an Authentication, Accounting and Authorization (AAA) authentication server and the like are involved, wherein the network service control equipment includes a BRAS, a service router and the like; and the application system may provide a download page, a video application and the like for the user.

As shown in Fig. 2, the double-acceleration method for content and network linkage according to the embodiment includes:
Step 201: the user initiates a network access request to the network service control equipment;
Step 202: the network service control equipment receives the network access request, maintains a user state, and initiates a user access request to the AAA authentication server;
Step 203: the AAA authentication server authenticates the user, transmits an authentication passing message about the user to the network service control equipment after the user passes authentication, and transmits an initial network policy associated with the user;
Step 204: the network service control equipment allocates an Internet Protocol (IP) address to the user after receiving the authentication passing message, and provides initial network service as to the initial network policy; and meanwhile, the network service control equipment transmits an online accounting package of the user to the AAA authentication server to notify the AAA authentication server that the user has started using the network service, and the AAA authentication server starts accounting the user.

Here, in order to enable the policy control server maintains an online state of the user and network policy information, the network service control equipment further needs to transmit the online information of the user to the policy control server at the same time when transmitting the online accounting package to the AAA authentication server; and the policy control server maintains the online state of the user and a current network policy state of the user after receiving the online information of the user;
Step 205: the user accesses the application system;
Step 206: the access of the user is reoriented to the CDN node server, and a terminal where the user is located establishes a connection with the CDN node server;
Step 207: the user selects application service, and the CDN node server creates a user state machine for the user according to the application service selected by the user, to manage and maintain a user state;

The user state includes: an ordinary download state, a network accelerated download state, a content accelerated download state, a content and network double-accelerated download state, an on state and an off state;
Step 208: the user makes a request of providing content acceleration service for the application service selected by the user to the CDN node server according to the application service selected by the user;
step 205 to step 208 may also be implemented as follows:
   the user accesses an application system;
   the access of the user is reoriented to the CDN node server, and the terminal where the user is located establishes a connection with the CDN node server;
   the CDN node server creates a user state machine for the user, to manage and maintain the user state; and
   the user selects the application service, and makes the request of providing the content acceleration service for the application service selected by the user to the CDN node server;
   here, the application service means download content selected by the user; and
   the CDN node server judges whether to provide the acceleration service for the application service selected by the user or not according to an attribute of the user and the application service selected by the user; if the attribute of the user and the application service selected by the user are consistent with an acceleration service policy, step 208 is continuously executed; otherwise the current processing flow is ended;
step 209: the CDN node server provides the content acceleration service for the application service selected by the user according to the request in step 208;
   here, a manner for the content acceleration service may be determined according to a specific implementation method of the CDN node server, and different solutions may be adopted for different link manners and download manners; for example, the CDN node server can be combined with a P2P technology, and meanwhile, the content acceleration service is provided for the application service selected by the user; the combination of the CDN node server and the P2P technology may make a content source in the application service selected by the user more controllable and reliable; in addition, the combination of the CDN node server and the P2P technology may fully utilize a characteristic of P2P to realize multipoint-to-point transmission to further realize the transmission of multiple content sources to the user, thereby fully ensuring the reliability of the content source of the user and increasing a download speed of the user;
   here, if the content acceleration service is successfully executed, then the user state in the user state machine is updated into the content accelerated download state; and if the content acceleration service fails, then the user state in the user state machine is still the ordinary download state;
   when the CDN node server provides the content acceleration service for the application service selected by the user, step 210 is executed to ensure a network transmission speed and quality;
step 210: the CDN node server transmits a network acceleration request for the application service selected by the user to the policy control server in the ordinary download state maintained by the user state machine or the content accelerated download state maintained by the user state machine;
   here, before step 210, the method may further include that the CDN node server sets its own interface for interacting with the policy control server; and a protocol adopted by the interface may be a Diameter protocol, a Common Open Policy Service (COPS) protocol, a private protocol and the like;
Step 211: the policy control server transmits a network acceleration policy for the application service selected by the user to the network service control equipment after receiving the network acceleration request;
   during specific implementation, the policy control server preferably transmits a network acceleration policy for user-selected application service to the network service control equipment; and if support is not provided, the policy control server may transmit a user network connection-based network acceleration policy to the network service control equipment;
Step 212: the network service control equipment provides network acceleration service for the application service selected by the user after receiving the network acceleration policy.

Here, for an implementation manner for the network acceleration service, the network service control equipment preferably provides a network acceleration service guarantee on the basis of the application service selected by the user; however, there may exist a difficulty, the network acceleration guarantee may be difficultly implemented specifically for the application service selected by the user, and under such a condition, network guarantee service may be provided selectively for a network connection of the user to increase a network bandwidth of the user;
on an access network layer, for different networks that the user accesses and different access network scenarios, different network guarantee service may be adopted; and if a network that the user accesses limits the speed of the user, the network service control equipment performs network acceleration and provides network guarantee in its own equipment, and further needs to negotiate with the access network to increase a bandwidth of a corresponding port to ensure the network quality of the user through an Access Node Control Protocol (ANCP). If the network that the user accesses does not limit the speed of the user, the network quality of the user is ensured only by virtue of a Quality of Service (QoS) policy deployed in the network accessed by the user;
step 213: the network service control equipment transmits a network acceleration policy execution success or failure message to the policy control server according to a network acceleration policy implementation result;
step 214: the policy control server transmits the network acceleration policy execution success or failure message to the CND node server after receiving the network acceleration policy execution success or failure message from the network service control equipment;
step 215: the CDN node server updates the user state in the user state machine according to the received network acceleration policy execution success or failure message;

If the network acceleration policy is successfully executed, the user state in the user state machine is updated into the content and network double-accelerated download state, then the content and network double-acceleration of the application service selected by the user can be implemented, an application service completion message is generated after the application service selected by the user is completed, and step 216 is executed;
step 216: the application service completion message triggers the CDN node server to cancel the content acceleration service for the application service selected by the user and release a corresponding resource; and meanwhile, the application service completion message triggers the CDN node server to transmit a cancelation request of the network acceleration policy to the policy control server;
step 217: the policy control server detects the online state and policy state of the user after receiving the cancellation request, and transmits a network acceleration cancellation policy for the application service selected by the user to the network service control equipment;
step 218: the network service control equipment cancels the network acceleration service for the application service selected by the user after receiving the network acceleration cancellation policy, and transmits a network acceleration policy cancellation success or cancellation failure message to the policy control server; and
step 219: the policy control server transmits the network acceleration policy cancellation success or failure message to the CDN node server after receiving the network acceleration policy cancellation success or failure message.

After the network acceleration policy is cancelled, the user enters the off state, and the corresponding resource is released.

In terms of accounting, a corresponding accounting record can be generated according to an online condition, the downloaded content, the user state maintained in the user state machine in the CDN node server, and the like, and is transmitted to an accounting system through a northbound interface.

In the whole process, user states are maintained respectively in the network service control equipment, the policy control server and the CDN node server, therefore, a unique identifier for associating users is required, and a source IP address and source port number of a user may be adopted as the unique identifier.

The embodiment of the disclosure has a characteristic as follows: the CDN node server creates the user state machine for a user or for application service selected by the user to manage a user state, and the CDN node server transmits a network acceleration policy request to the policy control server to provide network acceleration service for the application service selected by the user; and with the participation of the CDN node server, the content and network double-acceleration of the application service selected by the user can be implemented.

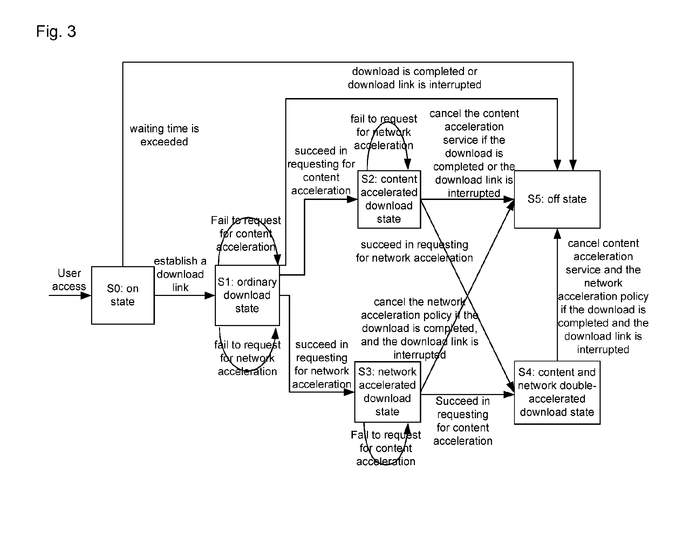

Fig. 3 is an implementation flowchart of a double-acceleration process for content and network linkage with a user state machine according to an embodiment of the disclosure, and the specific process is as follows.

After a user selects application service such as accelerated download service, and a CDN node server creates a user state machine for the user, wherein a user state in the user state machine includes an ordinary download state S1, a network accelerated download state S2, a content accelerated download state S3, a content and network double-accelerated download state S4, an on state S0 and an off state S5.

After the CDN node server creates a user state machine for the user, the user enters the on state S0.

In the on state S0, the user tries to establish a download link, enters the ordinary download state S1 if the download link is successfully established, and waits or tries to re-establish the download link if the download link fails to be established, and if re-linking fails and a limit such as a waiting time length is exceeded, the user enters the off state S5, and a corresponding resource is released.

In the ordinary download state S1, the user may try to make a request of providing a content acceleration request for the application service selected by the user, the specific operation of which is as follows: the user in the ordinary download state S1 transmits a content acceleration service request to the CDN node server, the CDN node server determines whether to accept the content acceleration service request or not according to its own resource condition after receiving the content acceleration service request, and under a resource admission condition, the CDN node server accepts the content acceleration service request, and provides the content acceleration service for the application service selected by the user, and then the user enters the content accelerated download state S2; if the CDN node server does not have sufficient resources, the CDN node server cannot accept the content acceleration service request, and the user fails to request for the content acceleration service, the user is kept in the ordinary download state S1; and then a waiting mechanism may be started, and the content acceleration service request is reinitiated after a certain time interval.

The user in the ordinary download state S1 may also try to make a request of providing network acceleration service for the application service selected by the user, the specific operation of which is as follows: the CDN node server transmits a network acceleration request for the application service selected by the user to a policy control server to request a network to execute a network acceleration policy such as bandwidth increase and network quality guarantee for the application service selected by the user in the ordinary download state S1 maintained by the user state machine; the policy control server checks a user state and a network resource after receiving the network acceleration request, and transmits a network acceleration policy; if the policy control server transmits a network acceleration policy execution success message to the CDN node server, the user enters the network accelerated download state S3; if the policy control server transmits a network acceleration policy execution failure message to the CDN node server, the user is kept in the ordinary download state S1; and then a waiting mechanism may be started, and the network acceleration service request is reinitiated after a certain time interval.

If the application service selected by the user is completed when the user is in the ordinary download state S1, the user directly enters the off state S5, and the corresponding resource is released.

If the download link is interrupted when the user is in the ordinary download state S1, that is, the system determines that an effective link of the user is disconnected or the service is interrupted, the user directly enters the off state S5, and the corresponding resource is released.

The user in the content accelerated download state S2 may try to make a request of providing the network acceleration service for the application service selected by the user, the specific operation of which is as follows: the CDN node server transmits the network acceleration request for the application service selected by the user to the policy control server to request the network to execute the network acceleration policy such as bandwidth increase and network quality guarantee for the application service selected by the user in the content accelerated download state S2 maintained by the user state machine; the policy control server checks the user state and the network resource after receiving the network acceleration request, and transmits the corresponding network acceleration policy; if the policy control server transmits the network acceleration policy execution success message to the CDN node server, the user enters the network content and network double-accelerated download state S4; if the policy control server transmits the network acceleration policy execution failure message to the CDN node server, the user is kept in the content accelerated download state S2; and then a corresponding waiting mechanism may be started, and the network acceleration service request is reinitiated after a certain time interval.

If the application service selected by the user is completed in the content accelerated download state S2 of the user, an application service completion message is generated, the application service completion message triggers the CDN node server to cancel the content acceleration service for the application service selected by the user, and then the user enters the off state S5, and the corresponding resource is released.

If the download link is interrupted in the content accelerated download state S2 of the user, that is, the system determines that the effective link of the user is disconnected or the service is interrupted, a download connection interruption message in the CDN node server triggers the CDN node server to cancel the content acceleration service for the application service selected by the user, and then the user enters the off state S5, and the corresponding resource is released.

The user in the network accelerated download state S3 may also try to make a request of providing the network acceleration service for the application service selected by the user, the specific operation of which is as follows: the user in the network accelerated download state S3 transmits the content acceleration service request to the CDN node server, the CDN node server determines whether to accept the content acceleration service request or not according to its own resource condition after receiving the content acceleration service request, and under the resource admission condition, the CDN node server accepts the content acceleration service request, and provides the content acceleration service for the application service selected by the user, and then the user enters the content and network double-accelerated download state S4; if the CDN node server does not have sufficient resources, the CDN node server cannot accept the content acceleration service request, and the user fails to request for the content acceleration service, the user is kept in the network accelerated download state S3; and then a corresponding waiting mechanism may be started, and the content acceleration service request is reinitiated after a certain time interval.

If the application service selected by the user is completed when the user is in the network accelerated download state S3, the application service completion message is generated, the application service completion message triggers the CDN node server to transmit a cancelation request for cancelling the network acceleration policy to the policy control server, the policy control server transmits a network acceleration cancellation policy for the application service selected by the user to network service control equipment after receiving the cancellation request, and the network service control equipment cancels the network acceleration service for the application service selected by the user after receiving the network acceleration cancellation policy, and transmits information of an execution result to the policy control server; the policy control server feeds back the information of the execution result to the CDN node server after receiving the information of the execution result; and after the network acceleration policy is cancelled, the user enters the off state S5, and the corresponding resource is released.

If the download link is interrupted when the user is in the network accelerated download state S3, that is, the system determines that the effective link of the user is disconnected or the service is interrupted, the download connection interruption message in the CDN node server triggers the CDN node server to transmit the cancelation request of the network acceleration policy for the application service selected by the user to the policy control server; the policy control server transmits the network acceleration cancellation policy for the application service selected by the user to network service control equipment after receiving the cancellation request, and the network service control equipment cancels the network acceleration service for the application service selected by the user after receiving the network acceleration cancellation policy, and transmits the information of the execution result to the policy control server; the policy control server feeds back the information of the execution result to the CDN node server after receiving the information of the execution result; and after the network acceleration policy is cancelled, the user enters the off state S5, and the corresponding resource is released.

If the application service selected by the user is completed when the user is in the content and network double-accelerated download state S4, the application service completion message is generated, the application service completion message triggers the CDN node server to cancel the content acceleration service for the application service selected by the user, and meanwhile, the application service completion message triggers the CDN node server to transmit the cancelation request of the network acceleration policy to the policy control server, the policy control server transmits the network acceleration cancellation policy for the application service selected by the user to network service control equipment after receiving the cancellation request, and the network service control equipment cancels the network acceleration service for the application service selected by the user after receiving the network acceleration cancellation policy, and transmits the information of the execution result to the policy control server; the policy control server feeds back the information of the execution result to the CDN node server after receiving the information of the execution result; and after the content acceleration service and the network acceleration service are cancelled, the user enters the off state S5, and the corresponding resource is released.

If the download link is interrupted when the user is in the content and network double-accelerated download state S4, that is, the system determines that the effective link of the user is disconnected or the service is interrupted, the download connection interruption message in the CDN node server triggers the CDN node server to cancel the content acceleration service for the application service selected by the user; meanwhile, the download connection interruption message in the CDN node server also triggers the CDN node server to transmit the cancelation request of the network acceleration policy to the policy control server, the policy control server transmits the network acceleration cancellation policy for the application service selected by the user to the network service control equipment after receiving the cancellation request, and the network service control equipment cancels the network acceleration service for the application service selected by the user after receiving the network acceleration cancellation policy, and transmits the information of the execution result to the policy control server; the policy control server feeds back the information of the execution result to the CDN node server after receiving the information of the execution result; and after the content acceleration service and the network acceleration service are cancelled, the user enters the off state S5, and the corresponding resource is released.

According to the embodiments of the disclosure, the policy control server, the CDN node server, the network service control equipment and the application system are fully integrated, and the user state machine and the interface for interacting with the policy control server are arranged in the CDN node server, so that the whole system can implement user state-triggered content and network double-acceleration for a specific user and specific content. Therefore, requirements of the user on a network bandwidth, network quality, content transmission speed and the like in an application scenario such as file download and video watching can be met, thereby effectively solving the problems that the content cannot be ensured during the pure network access bandwidth increase of a current BoD service and the optimization of the application layer is limited by the network bandwidth and the network quality.

The above are only embodiments of the disclosure and not intended to limit the scope of protection of the disclosure.

## Claims

1. A double-acceleration method for content and network linkage, comprising:
providing, by a Content Delivery Network (CDN) node server, content acceleration service for application service selected by a user;
transmitting, by the CDN node server, a network acceleration request for the application service selected by the user to a policy control server;
transmitting, by the policy control server, a network acceleration policy for the application service selected by the user to network service control equipment after the policy control server receives the network acceleration request; and
providing, by the network service control equipment, network acceleration service for the application service selected by the user after the network service control equipment receives the network acceleration policy.

2. The method according to claim 1, before the CDN node server provides the content acceleration service for the application service selected by the user, the method further comprising:
creating, by the CDN node server, a user state machine for the user to manage and maintain a user state; or,
creating, by the CDN node server, a user state machine for the user according to the application service selected by the user, to manage and maintain a user state.

3. The method according to claim 2, before the CDN node server creates the user state machine for the user to manage and maintain the user state, the method further comprising:
accessing, by the user, an application system;
reorienting the access of the user to the CDN node server; and
selecting, by the user, the application service.

4. The method according to claim 2, wherein the user state comprises an ordinary download state, a network accelerated download state, a content accelerated download state, a content and network double-accelerated download state, an on state and an off state.

5. The method according to claim 4, wherein transmitting, by the CDN node server, the network acceleration request for the application service selected by the user to the policy control server comprises:
transmitting, by the CDN node server, the network acceleration request for the application service selected by the user to the policy control server in the ordinary download state or content accelerated download state maintained by the user state machine.

6. The method according to any one of claims 1 to 5, before the CDN node server transmits the network acceleration request for the application service selected by the user to the policy control server, the method further comprising:
setting, by the CDN node server, own interface for interacting with the policy control server.

7. The method according to any one of claims 1 to 5, after the network service control equipment provides the network acceleration service for the application service selected by the user after the network service control equipment receives the network acceleration policy, the method further comprising:
generating an application service completion message for triggering after the application service selected by the user is completed, wherein the application service completion message triggers the CDN node server to cancel the content acceleration service for the application service selected by the user, and meanwhile, triggers the CDN node server to transmit a cancelation request for cancelling the network acceleration policy to the policy control server;
transmitting, by the policy control server, a network acceleration cancelation policy for the application service selected by the user to the network service control equipment after the policy control server receives the cancelation request; and
cancelling, by the network service control equipment, the network acceleration service for the application service selected by the user after the network service control equipment receives the network acceleration cancelation policy.

8. A double-acceleration system for content and network linkage, comprising a Content Delivery Network (CDN) node server, a policy control server and network service control equipment, wherein
the CDN node server is configured to provide content acceleration service for application service selected by a user, and transmit a network acceleration request for the application service selected by the user to the policy control server;
the policy control server is configured to transmit a network acceleration policy for the application service selected by the user to the network service control equipment according to the network acceleration request after the policy control server receives the network acceleration request transmitted by the CDN node server; and
the network service control equipment is configured to provide network acceleration service for the application service selected by the user after the network service control equipment receives the network acceleration policy transmitted by the policy control server.

9. The system according to claim 8, wherein the CDN node server is further configured to create a user state machine for the user to manage and maintain a user state; or,
the CDN node server is further configured to create a user state machine for the user according to the application service selected by the user, to manage and maintain a user state.

10. The system according to claim 8 or 9, wherein
the CDN node server is further configured to trigger itself to cancel the content acceleration service for the application service selected by the user according to an application service completion message, and transmit a cancellation request for cancelling the network acceleration policy to the policy control server;
the policy control server is further configured to transmit a network acceleration cancelation policy for the application service selected by the user to the network service control equipment after the policy control server receives from the CDN node server the cancelation request for cancelling the network acceleration policy; and
the network service control equipment is further configured to cancel the network acceleration service for the application service selected by the user according to the network acceleration cancellation policy after the network service control equipment receives the network acceleration cancelation policy transmitted by the policy control server.
